# FASCICULE DE BREVET EUROPEEN

(11) **EP 1 059 422 B1**
(45) Date de publication et mention de la délivrance du brevet: **06.10.2004**
(21) Numéro de dépôt: 00401608.5
(22) Date de dépôt: 08.06.2000
(51) Int. Cl.: F01D 17/16

(54) **Dispositif de protection du méchanisme de commande des volets d'une roue directrice d'entrée de turboréacteur**
Schutzvorrichtung für den Stellantrieb der Statorschaufelblätter eines Turbostrahltriebwerks
Protection device for the nozzle vane actuator of a turboreactor

(30) Priorité: 10.06.1999 FR 9907313
(43) Date de publication de la demande: 13.12.2000
(73) Titulaire: SNECMA MOTEURS, 75015 Paris (FR)
(72) Inventeur: Conete, Eric, 77240 Cesson (FR); Marlin, François Marie Paul, 77760 Villiers sous Grez (FR)

(56) Documents cités:
- GB-A- 989 828
- US-A- 4 695 220
- US-A- 4 867 636
- PATENT ABSTRACTS OF JAPAN vol. 004, no. 025 (M-001), 5 mars 1980 (1980-03-05) & JP 55 001475 A (HITACHI LTD), 8 janvier 1980 (1980-01-08)

## Description

### Domaine de l'invention

Le domaine de l'invention est celui des turboréacteurs qui possèdent une roue directrice d'entrée, constituée de volets, dont l'orientation d'inclinaison est commandée en cours de fonctionnement.

L'invention concerne, en particulier, la protection du vérin de commande d'orientation de ces volets.

### Art antérieur et problème posé

Lors de l'utilisation de certains turboréacteurs, tels que ceux utilisés sur les avions de chasse, certaines conditions de vol imposent des contraintes sur le flux d'air à l'entrée du turboréacteur. En effet, dans des conditions météorologiques spéciales et pour des conditions de fonctionnement données du turboréacteur, des phénomènes perturbant le flux d'air à l'entrée du turboréacteur se produisent, tels que le « pompage ». Un tel phénomène fait que le débit réel instantané d'air à l'entrée du turboréacteur ne correspond pas au débit d'air théorique voulu au même instant, pour les conditions de fonctionnement désirées du turboréacteur. Il s'ensuit des phénomènes d'aspiration intenses et brutaux à l'entrée du turboréacteur, au niveau de la roue directrice d'entrée, et en particulier au niveau de ses volets à orientation variable. Ceci se traduit par des instabilités aérodynamiques au niveau du compresseur.

De même, lorsque l'avion est à l'arrêt ou à très basse altitude, l'ingestion d'objets ou de volatiles peut provoquer un choc important sur un ou plusieurs volets. Il s'ensuit qu'une des pièces constituant la chaîne mécanique de ces volets est détériorée ou cassée. Or, dans la plupart des cas, la commande de cette chaîne mécanique est assurée par un vérin fonctionnant avec le carburant du turboréacteur sous pression. Un tel choc sur un de ces volets pourrait provoquer, directement ou indirectement par une des pièces de la chaîne de mécanique, une détérioration du vérin de commande et une fuite importante de carburant. Un tel événement est à proscrire dans tous les cas d'utilisation pour ne jamais risquer de mettre en péril un vol utilisant un de ces turboréacteurs.

Le but de l'invention est donc d'assurer la sécurité des vols des avions utilisant de tels turboréacteurs en protégeant les pièces sensibles, telles que le vérin de commande des volets de la roue directrice d'entrée.

Par ailleurs, dans le document de brevet US-4 695 220, on connaît un système mécanique fusible permettant de limiter les efforts dans chacun des volets de la roue directrice d'entrée d'un turbomoteur, en cas d'ingestion de corps étrangers. Chaque volet est équipé d'un fusible entre son levier de commande et l'anneau de commande de la roue directrice d'entrée, ce qui permet de protéger chaque volet impacté. Une fois la pièce fusible rompue, le déplacement du levier de commande du volet est limité par l'empreinte dans l'anneau. Différents systèmes d'amortissement sont utilisés, tels que des ressorts, des matériaux élastomères, dans l'empreinte de l'anneau pour consommer l'énergie liée à la rupture de la pièce fusible.

Une telle disposition a pour inconvénient de devoir équiper chaque volet d'une pièce fusible, ce qui constitue un handicap en poids en construction et en coût.

### Résumé de l'invention

A cet effet, l'objet principal de l'invention est un dispositif de protection du mécanisme de commande des volets d'une roue directrice d'entrée d'un turboréacteur, ce mécanisme comprenant :
- un vérin de commande ;
- une pièce fusible de transmission actionnée par le vérin de commande ;
- un anneau de commande entraîné par le vérin de commande, par l'intermédiaire de la pièce fusible de transmission ; et
- pour chaque volet, un levier de commande pour orienter le volet correspondant et actionné par l'anneau de commande.

Selon l'invention, la pièce fusible de transmission est unique et constitue un maillon du mécanisme de commande placé entre le vérin de commande et l'anneau de commande.

Dans une réalisation préférentielle de l'invention, la pièce fusible de transmission est une biellette ayant une partie à section rétrécie entre le vérin de commande et l'anneau de commande, et qu'une pièce pivotante de transmission est utilisée à la sortie du vérin, avant la biellette et articulée sur ces deux éléments.

Dans ce cas, il est avantageux de prévoir une protection tubulaire placée autour de la partie de section rétrécie.

Cette protection tubulaire peut avantageusement être réalisée par une double épaisseur de gaine thermorétractable.

D'autre part, la partie à section rétrécie peut avoir, ainsi que l'ensemble de la biellette, une forme tubulaire.

Dans une autre réalisation de l'invention, la pièce fusible de transmission est un boulon fusible à section rétrécie, placée dans une chape aval de la pièce de transmission pivotante.

Dans le but d'éviter que la biellette, une fois rompue, ne vienne détériorer une partie mécanique du mécanisme, notamment le vérin, il est très avantageux de prévoir une pièce anti-débattement, fixée sur une chape aval de la pièce pivotante de transmission et recouvrant l'extrémité de la biellette pour empêcher cette dernière d'effectuer une rotation d'amplitude susceptible de provoquer des chocs sur le vérin.

### Liste des figures

L'invention et ses caractéristiques techniques seront mieux comprises à la lecture de la description suivante de réalisation de l'invention.
La figure 1 représente, vu de l'extérieur, le mécanisme de commande des volets équipé du dispositif de protection selon l'invention.
La figure 2 représente une biellette du mécanisme de commande, utilisée en tant que pièce fusible.
La figure 3 représente, en coupe, un autre type de biellette utilisée comme pièce fusible et équipée d'une protection tubulaire.
La figure 4 représente, en coupe, un autre type de biellette fusible.
La figure 5 représente, en coupe, une chape aval d'une pièce de transmission pivotante avec un axe utilisé comme pièce fusible.
La figure 6 représente, en coupe, la chape aval d'une pièce pivotante, équipée de moyens de réglage du jeu.
La figure 7 représente, en coupe, un autre moyen de réglage du jeu de la chape aval d'une pièce de transmission pivotante.
La figure 8 représente, en vue externe cavalière, des butées de positionnement de l'anneau de commande, utilisées conjointement avec le dispositif de protection selon l'invention.
La figure 9 représente, en vue de détail cavalière, la pièce anti-débattement utilisée avec le dispositif de protection selon l'invention.

### Description détaillée de plusieurs réalisations de l'invention

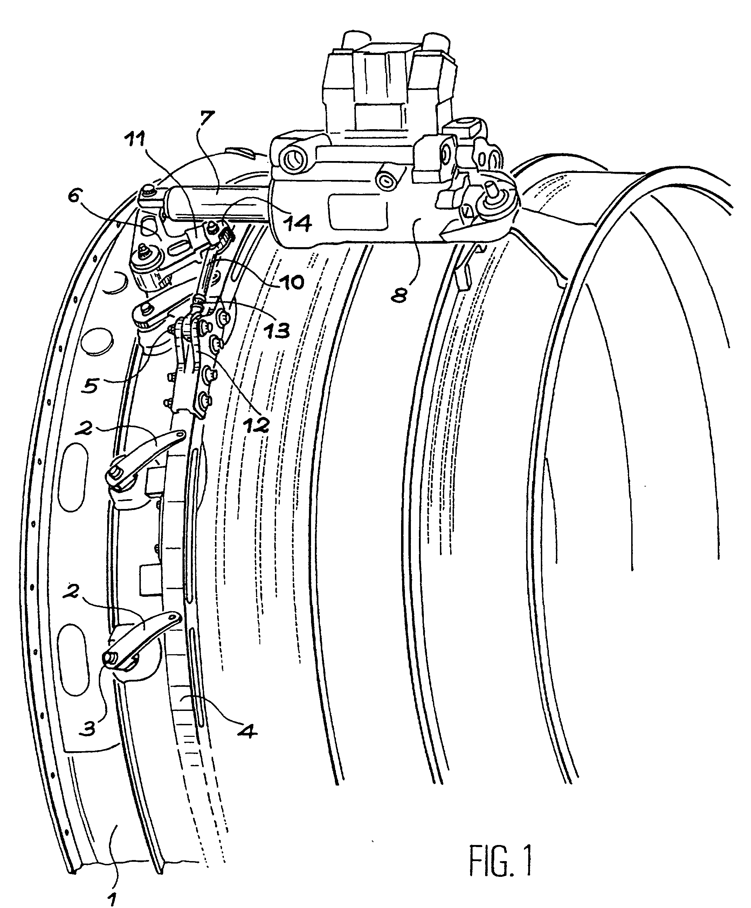

En référence à la figure 1, l'entrée d'un turboréacteur est formée par un carter d'entrée 1 d'une roue directrice d'entrée qui a pour but de régler le flux d'air rentrant dans le turboréacteur. Cette roue directrice d'entrée possède des volets inclinables, non représentés, mais suggérés par leur levier de commande 2 placé à l'extérieur du carter d'entrée 1. Ils sont solidaires des volets et montés chacun pivotant autour d'un axe de pivotement de volets 3 perpendiculaires à l'axe fictif du turboréacteur. L'inclinaison des volets est obtenue grâce à un vérin de commande 8 placé à l'extérieur du carter d'entrée 1 et dont le piston 7 actionne un anneau de commande 4 des volets, par l'intermédiaire d'une pièce pivotante de transmission 6. L'anneau de commande 4 fait toute la périphérie du carter d'entrée 1. L'extrémité de chaque levier de commande 2 des volets est montée pivotante sur cet anneau de commande 4. De la sorte, lorsque cet anneau de commande 4 effectue une légère rotation autour du carter d'entrée 1, chacun des volets de la roue directrice d'entrée pivote autour de son axe 3.

Une biellette 10 transmet le mouvement de la pièce pivotante de transmission 6 à l'anneau de commande 4. A cet effet, elle est montée pivotante dans une chape 12 de l'anneau de commande 4, autour d'un axe de pivotement 5 parallèle à l'axe du turboréacteur et fixe par rapport à l'anneau de commande 4. Par son autre extrémité, la biellette 10 est montée également pivotante dans une chape aval 11 de la pièce pivotante de transmission 6.

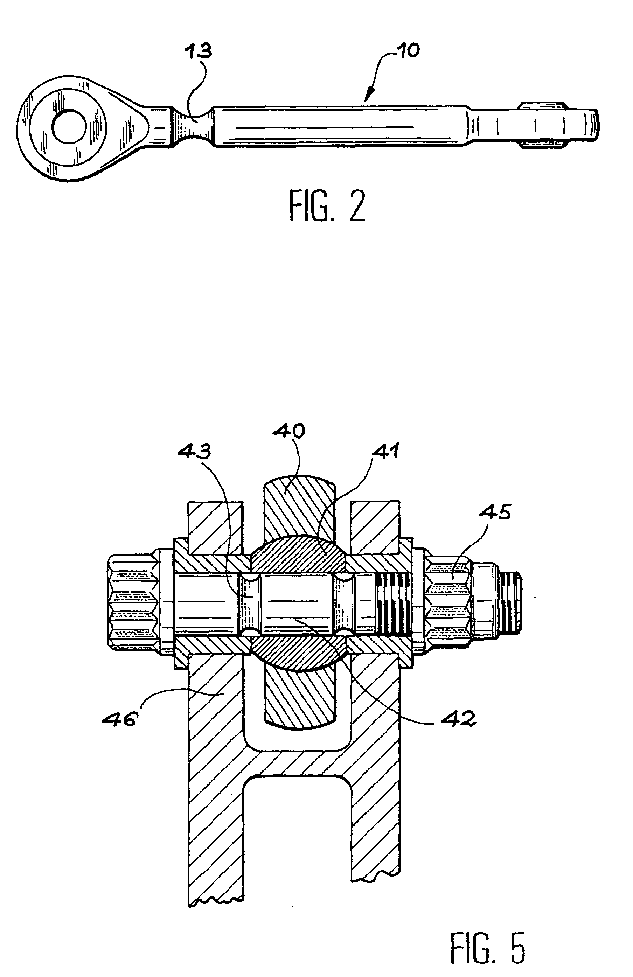

En référence à la figure 2, la biellette 10 est la pièce fusible et possède une partie fragilisée constituée par une partie à section rétrécie 13 de la biellette. Les raisons de la présence de cette partie à section rétrécie 13 ont été exposées plus tôt. Le résultat est qu'un choc ou une sollicitation mécanique exagérément importante sur l'un des volets, ne provoque pas la détérioration du vérin de commande 8. En effet, la partie à section rétrécie 13 sera la première à céder en cas de choc dans tout l'ensemble du mécanisme de commande des volets.

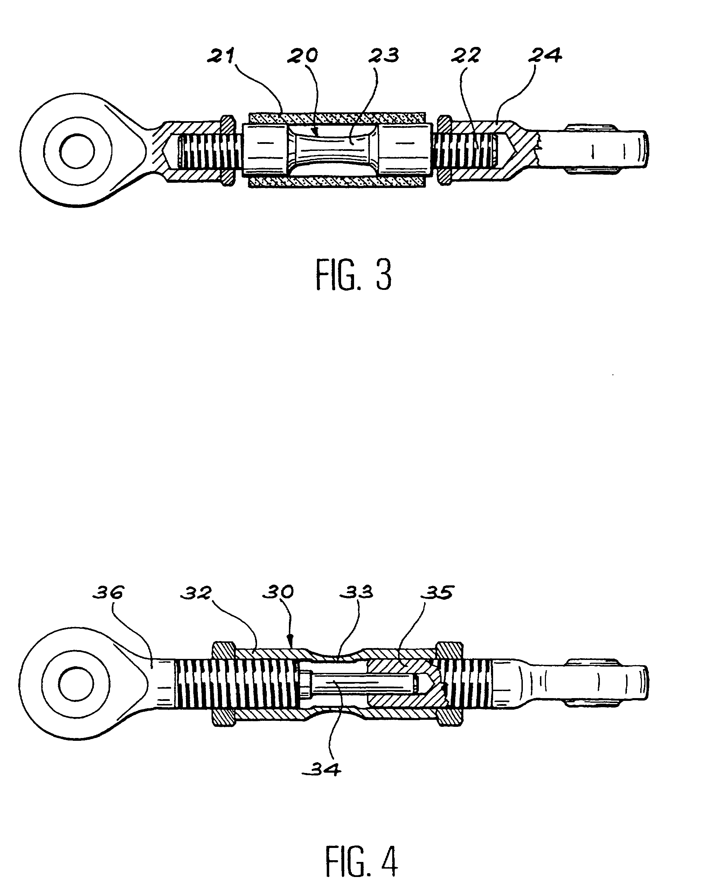

En référence à la figure 3, une autre réalisation de la biellette prévoit que celle-ci, référencée 20, ait une partie à section rétrécie 23 protégée de l'extérieur par une protection tubulaire 21, réalisée de préférence par une double épaisseur de gaine thermorétractable.

On peut prévoir, dans le cas de la figure 3, que la pièce de protection 21 soit transparente pour pouvoir vérifier l'état de la partie rétrécie 23.

On précise que la longueur de la biellette peut être réglable, grâce à deux extrémités filetées 22 se vissant dans le manche 24 de la partie mâle d'une chape.

La figure 4 montre une autre réalisation de la biellette, référencée 30. Elle est constituée par une pièce tubulaire 32 qui possède une partie à section rétrécie 33. On constate que l'intérieur de la biellette 30 est complétée par une tige 34 solidaire du manche 36 d'une première partie mâle d'une chape et venant se loger à l'intérieur du manche 35 d'une autre partie mâle d'une autre chape. On prévoit que ces deux manches 35 et 36 soient filetés, et que la pièce tubulaire 32 soit taraudée de manière à pouvoir régler la longueur de la biellette par vissage et dévissage.

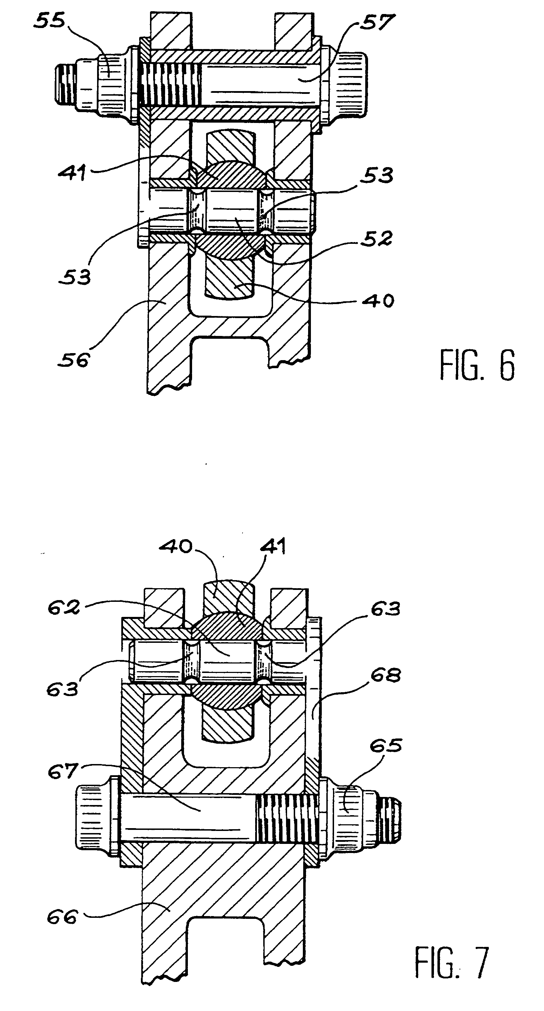

En référence à la figure 5, dans une autre réalisation de la pièce fusible selon l'invention, celle-ci est placée dans un boulon fusible 42 d'une chape du mécanisme de commande des volets. En effet, il est possible de placer cette partie fusible sur l'axe de pivotement 5 de la figure 1 dans une chape entre la biellette 10 et l'anneau de commande 4. Dans ce cas, la biellette ne possède pas de partie à section rétrécie.

En revenant à la figure 5, on peut prévoir une ou deux parties à section 43 dans le boulon 42 placé au centre de l'articulation de la biellette 40 autour d'une rotule 41. La partie femelle de la chape 46 est alors solidaire de l'anneau de transmission. Un écrou 45 permet de régler le serrage de cette partie femelle 46 autour de la biellette 40, de manière à ce que la rotule 41 ne subisse pas de jeu.

La figure 6 montre une autre réalisation permettant de régler le jeu autour de la rotule 41 de la bielle 40. Dans ce cas, la ou les parties fragilisées 53 sont placées sur un axe de chape 52 ne faisant pas partie d'un boulon. Par contre, la partie femelle de la chape 56 se prolonge de manière à ce qu'un boulon de réglage 57 puisse traverser cette chape 56 et qu'un écrou de réglage 55 permette de régler le jeu autour de la rotule 41.

La figure 7 montre encore une autre réalisation du réglage du jeu de la rotule 41 de la biellette 40. On utilise un autre boulon de réglage 67 placé à l'intérieur de la partie femelle de la chape 68 et un écrou de réglage 65. On agit par l'intermédiaire d'un flasque 68 qui est solidaire de l'axe 62 possédant une ou deux parties fragilisées 63.

La figure 1 montre également une pièce anti-débattement 14 placée autour de l'articulation constituée de la première extrémité de la biellette 10 et de la chape aval 11 de la pièce pivotante de transmission 6. En effet, dans le cas où la partie fusible 13 de la biellette 10 cède, cette dernière se trouve scindée en deux parties. Il s'avère nécessaire d'éviter que la partie la plus proche du vérin, c'est-à-dire celle attachée à la chape aval 11 de la pièce pivotante de transmission 6 ne vienne buter ou frapper le vérin de commande 8 ou la tige du piston 7. La pièce anti-débattement 14 est donc une pièce en forme de U, solidaire du boulon ou de l'axe de la chape 11 ou de la partie femelle de cette chape aval 11. Elle doit recouvrir l'extrémité de la biellette 10 pour que son débattement soit minimal.

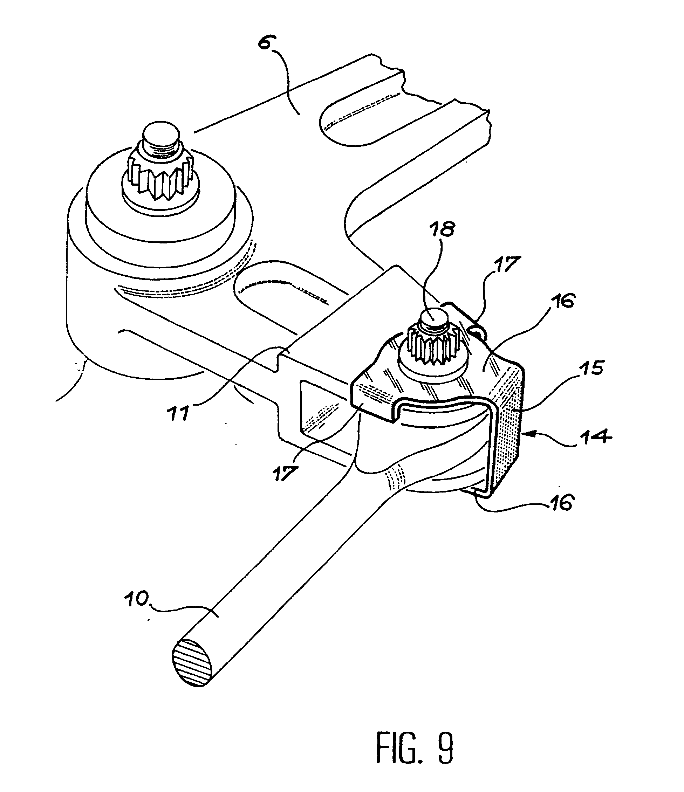

Une réalisation de cette pièce anti-débattement 14 est représentée en détail sur la figure 9. Sa forme en U est constituée principalement d'une partie centrale 15 et de deux branches 16, perpendiculaires à la partie centrale 15. Ces deux branches 16 sont parallèles et sont placées de part et d'autre de la tête de la bielle 10. Un léger jeu est ménagé entre la tête de la bielle 10 et les trois parties de la pièce anti-débattement 14, à savoir la partie centrale 15, et surtout les deux branches 16. On comprend ainsi que les possibilités de débattement de la bielle 10, par rapport à la chape 11 de la pièce pivotante de transmission 6 par rapport à laquelle elle est fixée, seront limitées principalement à une rotation autour de l'axe de fixation 18. Des pattes de positionnement 17 peuvent être disposées de part et d'autre de chaque branche 16 pour éviter à la pièce anti-débattement 14 de pivoter autour de l'axe de fixation 18.

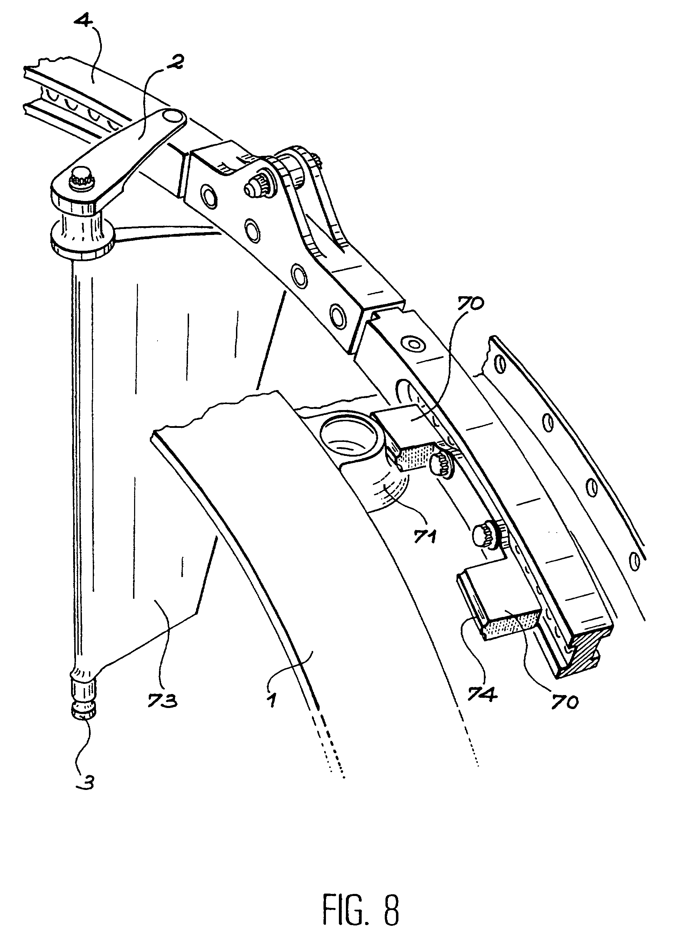

La figure 8 évoque le positionnement de l'anneau de commande 4. En effet, dans le cas où la biellette ou le boulon fusible sont rompus ou cassés, suite à un impact ou contrainte trop important sur l'un des volets, cet anneau de commande n'est plus maintenu longitudinalement par rapport à l'axe du turboréacteur. En d'autres termes, cet anneau de commande 4 a tendance à bouger longitudinalement. Selon l'invention, on équipe cet anneau de commande 4 de butées latérales 70 destinées à venir en contact avec un bossage 71 prévu dans le carter d'entrée 1 et destiné à positionner l'axe de pivotement 3 d'un volet 73. Une butée latérale 71 est prévue pour chacune des deux positions extrêmes de l'anneau de transmission 4. De plus, l'extrémité de chaque butée latérale 70 est avantageusement équipée d'une crête en matière amortissante 74 pour éviter les chocs sur les bossages 71.

### Avantages de l'invention

Que ce soit par une partie rétrécie sur la biellette ou sur l'axe de la chape, la solution proposée est peu coûteuse car un seul exemplaire, dans le mécanisme de commande, est nécessaire.

Son montage est simple.

De plus, comme le montre les figures 3 et 4, la biellette peut être réglable en longueur, ce qui facilite à la fois le montage et l'adaptation de cette solution à du matériel existant. La solution de la pièce anti-débattement est relativement simple, puisqu'elle constitue en l'adjonction d'une seule pièce en tôle.

Elle peut être adaptée sur des éléments existants déjà autour de la rotule de la biellette, sur la tête de la pièce pivotante de transmission.

La masse ajoutée est négligeable.

Le montage est simple car la pièce anti-débattement peut être simplement « clipsée ».

Enfin, cette solution est très peu coûteuse.

## Revendications

1. Dispositif de protection du mécanisme de commande des volets d'une roue directrice d'entrée de turboréacteur, ce mécanisme comprenant :
- un vérin de commande (8) ;
- une pièce fusible de transmission (10, 20, 30, 42, 52, 62) ;
- un anneau de commande (4) entraîné par le vérin de commande (8) par l'intermédiaire de la pièce fusible de transmission ;
- pour chaque volet, un levier de commande (2) pour orienter le volet correspondant et actionné par l'anneau de commande (4),
**caractérisé en ce que** la pièce fusible (10, 20, 30, 42, 52, 62) est unique et constitue un maillon du mécanisme de commande placé entre le vérin de commande (8) et l'anneau de commande (4).

2. Dispositif de protection selon la revendication 1, **caractérisé en ce que** la pièce fusible de transmission est une biellette (10, 20, 30) ayant une partie rétrécie (13, 23, 33) et étant placée par une première extrémité à une pièce pivotante de transmission (6) reliée elle-même à la tige (7) du vérin de commande (8) et reliée par une autre extrémité à l'anneau de commande (4).

3. Dispositif de protection selon la revendication 2, **caractérisé en ce que** la biellette (32) et sa partie rétrécie (33) sont tubulaires.

4. Dispositif de protection selon la revendication 2, **caractérisé en ce que** la biellette possède une pièce de protection (21) entourant la section rétrécie (23) de la biellette (20).

5. Dispositif de protection selon la revendication 4, **caractérisé en ce que** la protection tubulaire (21) est constituée d'une double épaisseur d'une gaine thermorétractable.

6. Dispositif de protection selon la revendication 1, **caractérisé en ce que** la pièce fusible de transmission est un axe fusible (42, 52, 62) possédant au moins une section rétrécie (43, 53, 63) d'une chape du mécanisme de commande des volets.

7. Dispositif de protection selon la revendication 2, **caractérisé en ce qu'**il comprend une pièce anti-débattement (14) fixée sur la chape aval (11) de la pièce pivotante de transmission (6) et recouvrant l'extrémité de la biellette (10) pour empêcher une rotation d'amplitude susceptible de provoquer des chocs sur le vérin de commande (8) ou sa tige de piston (7) de la part de la biellette (10), en cas de rupture de la partie à section rétrécie (13).

8. Dispositif de protection selon la revendication 1, **caractérisé en ce qu'**il comprend des butées latérales (70) fixées sur l'anneau de commande (4) latéralement pour venir prendre appui sur un bossage (71) de positionnement de l'axe de pivotement (3) d'un volet (73).

## Patentansprüche

1. Schutzvorrichtung für den Steuermechanismus der Statorschaufelblätter eines Turbostrahl-Triebwerks, wobei dieser Mechanismus
- einen Steuerzylinder (8),
- ein schmelzbares Übertragungsstück (10, 20, 30, 42, 52, 62),
- einen Steuerring (4), der von dem Steuerzylinder (8) über das schmelzbare Übertragungsstück bewegt wird, und
- für jedes Schaufelblatt einen Steuerhebel (2), der das entsprechende Schaufelblatt ausrichtet und durch den Steuerring (4) betätigt wird,
umfasst,
**dadurch gekennzeichnet,**
**dass** das schmelzbare Übertragungsstück (10, 20, 30, 42, 52, 62) ein einzelnes Teil ist und ein Glied des Steuermechanismus zwischen dem Steuerzylinder (8) und dem Steuerring (4) bildet.

2. Schutzvorrichtung nach Anspruch 1,
**dadurch gekennzeichnet,**
**dass** das schmelzbare Übertragungsstück ein Schwingarm (10, 20, 30) mit einem verengten Teil (13, 23, 33) ist, der mit einem ersten Ende an einem schwenkbaren Übertragungsteil (6) angeordnet ist, welches seinerseits mit dem Schaft (7) des Steuerzylinders (8) verbunden ist, und mit einem anderen Ende mit dem Steuerring (4) verbunden ist.

3. Schutzvorrichtung nach Anspruch 2,
**dadurch gekennzeichnet,**
**dass** der Schwingarm (32) und sein verengter Teil (33) rohrförmig ausgeführt sind.

4. Schutzvorrichtung nach Anspruch 2,
**dadurch gekennzeichnet,**
**dass** der Schwingarm ein Schutzteil (21) besitzt, das den verengten Abschnitt (23) des Schwingarms (20) umgibt.

5. Schutzvorrichtung nach Anspruch 4,
**dadurch gekennzeichnet,**
**dass** der rohrförmige Schutz (21) aus einer doppelten Dicke einer warmschrumpfbaren Hülle gebildet ist.

6. Schutzvorrichtung nach Anspruch 1,
**dadurch gekennzeichnet,**
**dass** das schmelzbare Übertragungsstück eine schmelzbare Achse (42, 52, 62) mit mindestens einen verengten Abschnitt (43, 53, 63) einer Gelenkgabel des Steuermechanismus der Schaufelblätter ist.

7. Schutzvorrichtung nach Anspruch 2,
**dadurch gekennzeichnet,**
**dass** sie ein Ausschlagbegrenzungsteil (14) enthält, das an der hinteren Gelenkgabel (11) des schwenkbaren Übertragungstells (6) befestigt ist und das Ende des Schwingarms (10) überdeckt, um Drehbewegungen mit einer Amplitude, die bei einem Bruch des Teils mit verengtem Querschnitt (13) Stöße auf den Steuerzylinder (8) oder seinen Zylinderschaft (7) von Seiten des Schwingarms (10) bewirken könnte, zu verhindern.

8. Schutzvorrichtung nach Anspruch 1,
**dadurch gekennzeichnet,**
**dass** sie seitliche Anschläge (70) aufweist, die seitlich an dem Steuerring (4) befestigt sind, um in Anlage an einem Buckel (71) zur Positionierung der Schwenkachse (3) eines Schaufelblatts (73) zu kommen.

## Claims

1. Protective device for the actuating mechanism of the vanes of an inducer of a turbojet engine, this mechanism comprising:
- an actuating cylinder (8);
- a meltable transmission part (10, 20, 30, 42, 52, 62);
- an actuating ring (4) driven by the actuating cylinder (8) via the meltable transmission part;
- for each vane, a control lever (2) for orientating the corresponding vane and actuated by the actuating ring (4),
**characterized in that** the meltable part (10, 20, 30, 42, 52, 62) is solitary and constitutes a link in the actuating mechanism placed between the actuating cylinder (8) and the actuating ring (4).

2. Protective device according to Claim 1, **characterized in that** the meltable transmission part is a connecting rod (10, 20, 30) having a constricted portion (13, 23, 33) and being fitted by a first end to a pivotal transmission part (6), itself connected to the rod (7) of the actuating cylinder (8) and connected by another end to the actuating ring (4).

3. Protective device according to Claim 2, **characterized in that** the connecting rod (32) and its constricted portion (33) are tubular.

4. Protective device according to Claim 2, **characterized in that** the connecting rod possesses a protective part (21) surrounding the constricted section (23) of the connecting rod (20).

5. Protective device according to claim 4, **characterized in that** the tubular protection (21) is constituted by a double thickness of a heat-shrinkable tubing.

6. Protective device according to Claim 1, **characterized in that** the meltable transmission part is a meltable shaft (42, 52, 62) possessing at least one constricted section (43, 53, 63) of a fork end of the actuating mechanism for the vanes.

7. Protective device according to Claim 2, **characterized in that** it comprises an anti-travel part (14) fixed on the downstream fork end (11) of the pivotal transmission part (6) and covering the end of the connecting rod (10) to prevent a rotation of an amplitude likely to cause the connecting rod (10) to impact upon the actuating cylinder (8) or its piston rod (7) in the event of rupture of the constrictedsection portion (13).

8. Protective device according to Claim 1, **characterized in that** it comprises side stops (70) fixed laterally on the actuating ring (4) so as to come to bear upon a positioning boss (71) of the pivot shaft (3) of a vane (73).
